# EUROPEAN PATENT APPLICATION

(11) **EP 2 645 353 A1**
(43) Date of publication of application: **02.10.2013**
(21) Application number: 11843223.6
(22) Date of filing: 18.11.2011
(51) Int. Cl.: G09F 9/00, B60R 11/02

(54) **DISPLAY DEVICE**

(30) Priority: 26.11.2010 JP 2010263455
(71) Applicant: Panasonic Corporation, Osaka 571-8501 (JP)
(72) Inventor: MORIYASU, Takayoshi, Osaka 540-6207 (JP)
(74) Representative: Grünecker, Kinkeldey, Stockmair & Schwanhäusser
(86) International application number: PCT/JP2011/006425
(87) International publication number: WO 2012/070210

(57) **Abstract**

A display device (1) includes a display (3) that is movable between a disuse position and a use position, a flap (10) that is movable between a close position and an open position, and a bellows type cover (16) that blocks a clearance that is formed when the display (3) moves. In this case, a size of the clearance that is formed when the display (3) moves changes as the display (3) moves, and a size of the bellows type cover (16) is variable in accordance with change of the size of the clearance. Thereby, contents can be prevented from being completely visible from the clearance that is formed when the display is moved, and foreign matters can be prevented from entering an inside from the clearance.

## Description

### [Technical Field]

The present invention relates to a display device which is used as an on-vehicle movable display or the like.

### [Background Art]

Conventionally, as an on-vehicle display device, a device with a movable type display has been proposed (for example, see Patent Literature 1). In a movable display device, a display is brought into a state in which the display protrudes from a dashboard at the time of use, and is brought into a state in which the display is housed in the dashboard (state covered with a lid body) at the time of disuse.

Incidentally, there exist various types of conventional movable display devices, and among them, there is a movable display device of a type which protrudes a display from a dashboard after opening a lid body when the display is brought into a use state from a disuse state. The display device of such a type performs an operation of closing the lid body after housing the display in the dashboard in a state in which the lid body is opened, when the display is brought into a disuse state from a use state. Accordingly, when the display is brought into a use state from a disuse state, and when the display is brought into a disuse state from a use state, the state in which the lid body is opened is present.

Consequently, in the conventional display devices, contents are completely visible from clearances formed when the lid bodies are opened, and a poor appearance is provided. Further, coins, cards and the like are sometimes placed on the dashboard, and these foreign matters (coins, cards and the like) easily enter the insides from the clearances formed when the lid bodies are opened.

### [Citation List]

### [Patent Literature]

[Patent Literature 1] Japanese Patent Laid-Open No. 08-9291 (page 7, Figure 1)

### [Summary of Invention]

### [Technical Problem]

The present invention is made under the above described background. An object of the present invention is to provide a display device which prevents contents from being completely visible from a clearance which is formed when moving a display, can improve an appearance, and can prevent foreign matters from entering from the clearance.

### [Solution to Problem]

One aspect of the present invention is a display device, and the display device includes a display that is movable between a disuse position in which the display is housed in a display housing section, and a use position in which the display is out from an opening of the display housing section, a flap that is provided at the opening of the display housing section, and is movable between a close position in which the flap covers the opening when the display is in the disuse position, and an open position in which the flap exposes the opening when the display is in the use position, and a cover that is provided at an inner side from the flap in a vicinity of the opening of the display housing section, and at least partially blocks a clearance that is formed between the opening of the display housing section and the display when the display moves from the disuse position to the use position, or when the display moves from the use position to the disuse position, wherein a size of the clearance that is formed between the opening of the display housing section and the display changes as the display moves, and a size of the cover is variable in accordance with change of the size of the clearance.

As described as follows, the other aspects exist in the present invention. Accordingly, the disclosure of the invention is intended to provide some of the aspects of the present invention, and is not intended to restrict the scope of the invention described and claimed herein.

### [Brief Description of Drawings]

[Figure 1] Figure 1 is a perspective view showing an outer appearance of a display device in an embodiment of the present invention.
[Figure 2] Figure 2 is an explanatory view of a configuration of a display unit in the embodiment of the present invention, Figure 2(a) is a plane view of the display unit, and Figure 2(b) is a side view of the display unit.
[Figure 3] Figure 3 is an explanatory view of an operation of the display unit in the embodiment of the present invention.
[Figure 4] Figure 4 is a perspective view of a flap unit in the embodiment of the present invention.
[Figure 5] Figure 5 is an explanatory view of an operation of the flap unit in the embodiment of the present invention, Figure 5(a) is a side view of a state in which a flap is closed (state of a close position), and Figure 5(b) is a side view of a state in which the flap is opened (state of an open position).
[Figure 6] Figure 6 is an exploded perspective view showing a configuration of a cover (bellows type cover) in the embodiment of the present invention.
[Figure 7] Figure 7 is an explanatory view of the configuration of the cover (bellows type cover) in the embodiment of the present invention.
[Figure 8] Figure 8 is a diagram explaining a flow of an open operation of the display in the embodiment of the present invention.
[Figure 9] Figure 9 is a diagram explaining a flow of a close operation of the display in the embodiment of the present invention.
[Figure 10] Figure 10 is an explanatory view of operation transition of the display and the bellows type cover (display: housed state, flap: closed state) in the embodiment of the present invention.
[Figure 11] Figure 11 is an explanatory view of the operation transition of the display and the bellows type cover (display: housed state, flap: 51 mm slide state) in the embodiment of the present invention.
[Figure 12] Figure 12 is an explanatory view of the operation transition of the display and the bellows type cover (display : 50 mm slide state, flap: 51 mm slide state) in the embodiment of the present invention.
[Figure 13] Figure 13 is an explanatory view of the operation transition of the display and the bellows type cover (display: 85 mm slide state, flap: 70 mm slide state) in the embodiment of the present invention.
[Figure 14] Figure 14 is an explanatory view of the operation transition of the display and the bellows type cover (display: movement completion state, flap: 51 mm slide state) in the embodiment of the present invention.
[Figure 15] Figure 15 is an explanatory view of the configurations of the covers in other embodiments, Figure 15(a) is a view showing one example of a slide type cover, and Figure 15(b) is a view showing one example of a roll type cover.

### [Description of Embodiments]

Detailed description of the present invention will be described hereinafter. However, the following detailed description and accompanying drawings do not restrict the invention.

A display device of the present invention includes a display that is movable between a disuse position in which the display is housed in a display housing section, and a use position in which the display is out from an opening of the display housing section, a flap that is provided at the opening of the display housing section, and is movable between a close position in which the flap covers the opening when the display is in the disuse position, and an open position in which the flap exposes the opening when the display is in the use position, and a cover that is provided at an inner side from the flap in a vicinity of the opening of the display housing section, and at least partially blocks a clearance that is formed between the opening of the display housing section and the display when the display moves from the disuse position to the use position, or when the display is moved from the use position to the disuse position, and has a configuration in which a size of the clearance that is formed between the opening of the display housing section and the display changes as the display moves, and a size of the cover is variable in accordance with change of the size of the clearance.

According to the configuration, when the display moves from the disuse position to the use position, or when the display moves from the use position to the disuse position, the clearance which is formed between the opening of the display housing section and the display is blocked by the cover. Accordingly, the contents of the display housing section can be prevented from being completely visible from the clearance, and the appearance is improved. Further, foreign matters (for example, coins, cards and the like) can be prevented from entering the display housing section from the clearance.

Further, the display device of the present invention includes a display drive section that moves the display between the disuse position and the use position, and may have a configuration in which one end portion of the cover is pressed against the display by a pressing member, the other end portion of the cover is fixed to an inside of the display housing section, and as the display moves by the display drive section, a distance between the one end portion of the cover that is pressed against the display and the other end portion of the cover that is fixed to the inside of the display housing section changes, and the size of the cover changes.

According to the configuration, the size of the cover can be changed in conjunction with the movement of the display by the display drive section. Accordingly, a drive section does not have to be additionally provided in order to change the size of the cover.

Further, the display device of the present invention may have a configuration in which the display drive section rotates the display in a tilt direction while slidingly moving the display in an entrance/exit direction when the display drive section moves the display between the disuse position and the use position.

According to the configuration, the display is rotated while being slidingly moved, and therefore, as compared with the case in which sliding movement and rotation of the display are separately performed, the time required (duration) when the display is moved between the disuse position and the use position can be reduced.

Further, the display device of the present invention includes a flap drive section that moves the flap between the close position and the open position, and may have a configuration in which after the flap drive section moves the flap from the close position to the open position, the flap drive section moves the flap to a cover position that is a position in which the flap is returned to the close position from the open position, and in which a clearance between the flap and the display is small.

According to the configuration, the flap is moved to the cover position when the display is in the use position, and the clearance between the flap and the display becomes small. Accordingly, foreign matters (for example, coins, cards and the like) can be prevented from entering the display housing section from the clearance.

Further, the display device of the present invention may have a configuration in which the cover is a bellows type cover, a slide type cover, or a roll type cover.

According to the configuration, the size of the cover can be made variable with the relatively simple configuration.

According to the present invention, the contents can be prevented from being completely visible from the clearance which is formed when the display is moved, the appearance can be improved, and foreign matters can be prevented from entering from the clearance.

### (Embodiments)

Hereinafter, a display device of an embodiment of the present invention will be described with use of the drawings. In the present embodiment, the case of a display device which is used in a completely housed type on-vehicle movable display and the like is shown as an example.

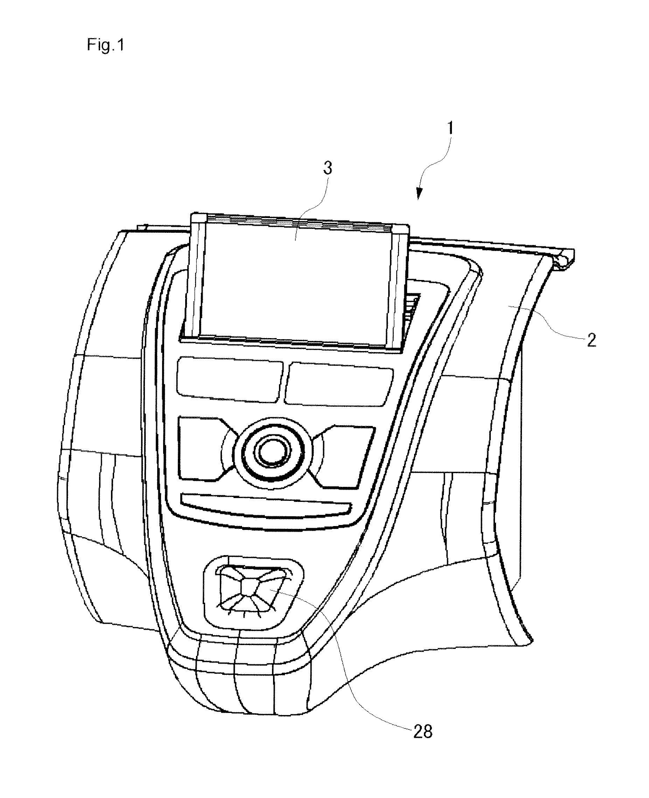

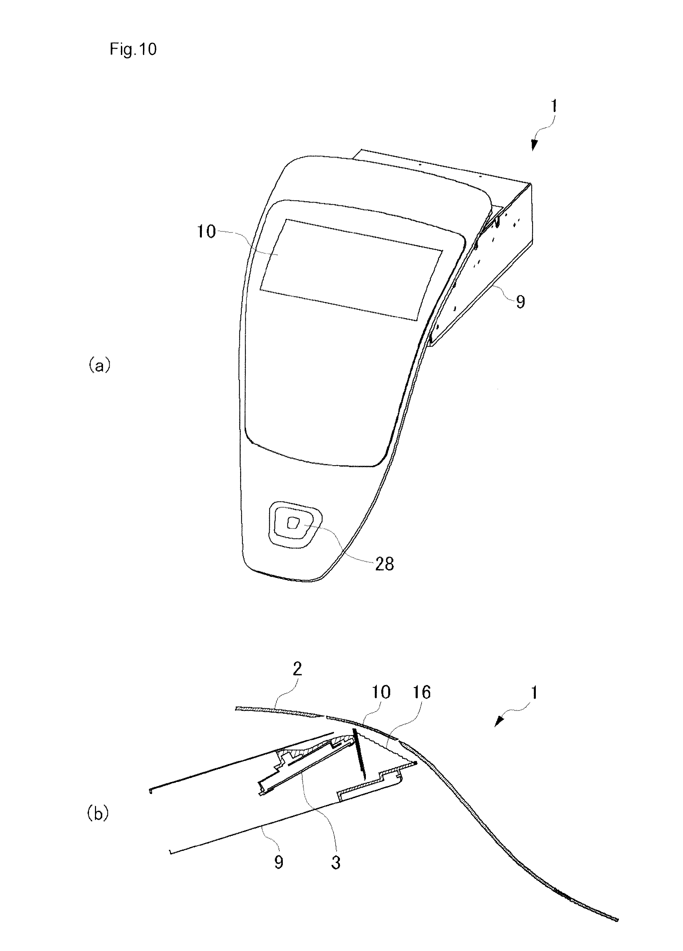

A configuration of the display device of the embodiment of the present invention will be described with reference to the drawings. Here, the entire configuration of the display device will be described first. Figure 1 is a perspective view showing an outer appearance of the display device of the present embodiment. As shown in Figure 1, a display device 1 of the present embodiment is an on-vehicle display device 1 which is included in a dashboard 2 of a vehicle. Further, the display device 1 has a movable type display 3, and the display 3 is brought into a state in which the display 3 protrudes to an outside of the dashboard 2 at a time of use, and is brought into a state in which the display 3 is housed inside the dashboard 2 at a time of disuse (see Figure 10 to Figure 14).

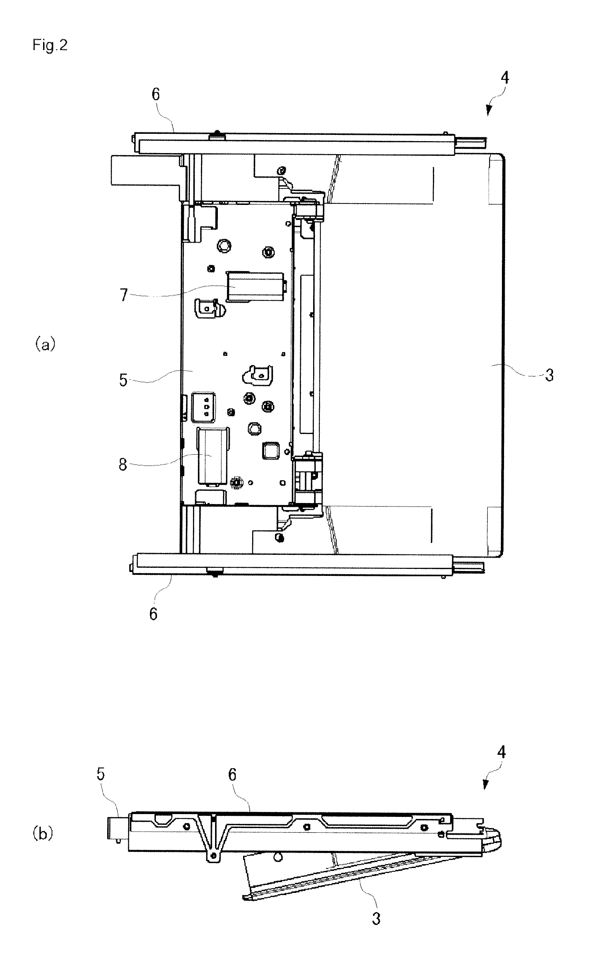

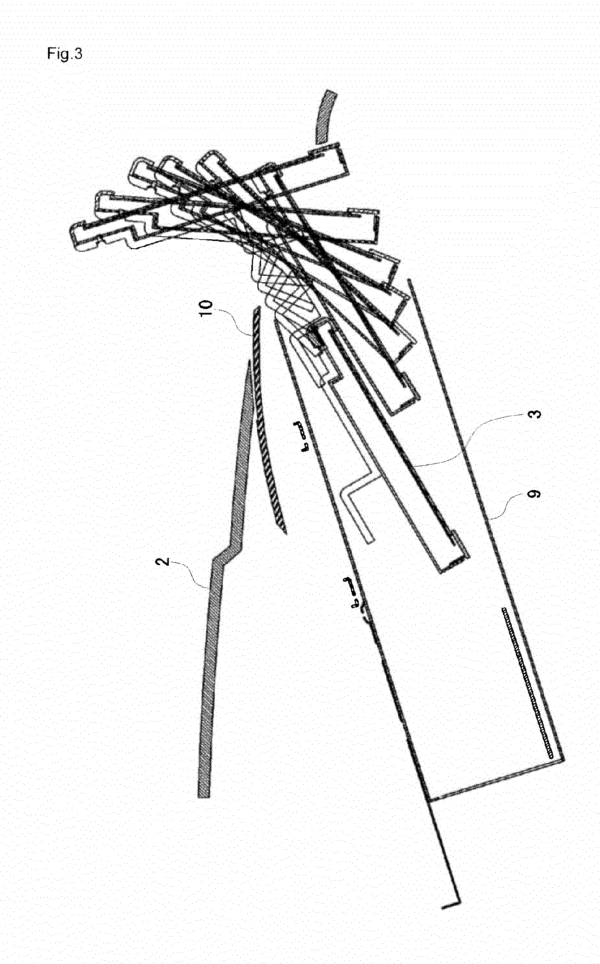

Next, a configuration of each component of the display device 1 will be described. The display device 1 includes a unit (display unit 4) for moving the display 3 between a use position and a disuse position. Figure 2 shows one example of the display unit 4. Figure 2(a) is a plan view of the display unit 4, and Figure 2(b) is a side view of the display unit 4. Further, Figure 3 is an explanatory view of an operation (movement of the display 3 between the use position and the disuse position) of the display unit 4.

As shown in Figure 2, the display unit 4 includes a movable base 5 to which the display 3 is mounted, and a pair of rails 6 which are mounted to both sides of the movable base 5. The display 3 is mounted to the movable base 5 to be rotatable in a tilt direction, and the movable base 5 is equipped with a tilt motor 7 for rotating the display in the tilt direction. Further, the movable base 5 is slidable in directions (entrance/exit directions) along the rail 6, and the movable base 5 includes a slide motor 8 for slidingly moving the movable base 5 in the entrance/exit direction.

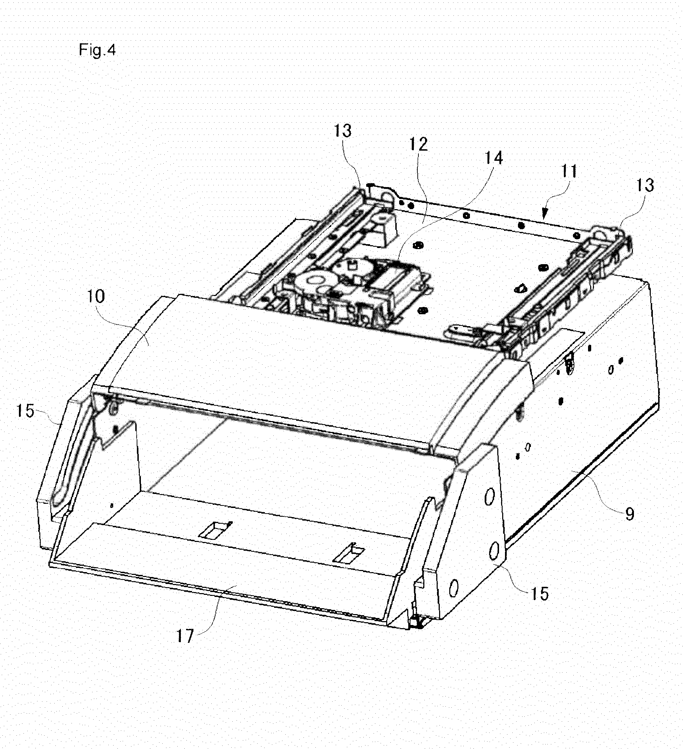

As described above, the display 3 moves between the disuse position (position at the time of disuse) and the use position (position at the time of use) (see Figure 10 to Figure 14). When the display 3 is in the disuse position, the display 3 is in the state in which the display 3 is completely housed in a space inside the dashboard 2 (see Figure 10). The space inside the dashboard 2 may be formed by a chassis 9 (see Figure 4). In this case, the chassis 9 includes the function of housing the display 3, and also can be called a display housing section. When the display 3 is in the use position, the display 3 is brought into the state in which the display 3 is out from an opening of the chassis 9 (display housing section) (see Figure 3). At this time, the display 3 is also in the state in which the display 3 is out from an opening of the dashboard 2. Accordingly, the opening of the dashboard 2 also can be called an opening of the display housing section.

In this case, as shown in Figure 3, when the display 3 moves between the disuse position and the use position, the display 3 rotates in the tilt direction while slidingly moving in the entrance/exit direction. The movement of the display 3 like this is realized by control of the tilt motor 7 and the slide motor 8. The tilt motor 7 and the slide motor 8 of the display unit 4 correspond to a display drive section of the present invention.

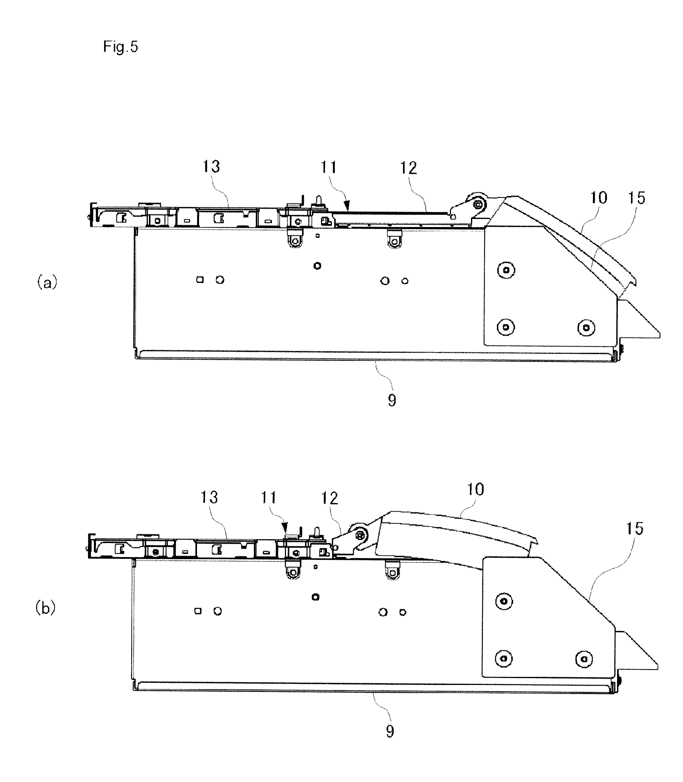

A flap 10 which is openable and closable is provided at the opening of the chassis 9. The display device 1 includes a unit (flap unit 11) for moving the flap 10 between a close position (closed position) and an open position (opened position). Figure 4 and Figure 5 each show an example of the flap unit 11. Figure 4 is a perspective view of the flap unit 11, and Figure 5 is an explanatory view of an operation of the flap unit 11. Figure 5(a) is a side view of a state in which the flap 10 is closed (state of the close position), and Figure 5(b) is a side view of a state in which the flap 10 is opened (state of the open position).

As shown in Figure 4, the flap unit 11 is mounted on a top surface of the chassis 9. The flap unit 11 includes a movable base 12 to which the flap 10 is mounted, and a pair of rails 13 which are mounted to both sides of the movable base 12. The movable base 12 includes a slide motor 14 which slidingly moves the movable base 12 in a direction along the rail 13. The flap 10 is rotatably mounted to the movable base 12, and a pair of guide sections 15 which guide the flap 10 are provided at the opening of the chassis 9.

As shown in Figure 5, when the movable base 12 slides in the direction along the rail 13, the flap 10 is guided by the guide section 15 and is movable between the close position and the open position. As shown in Figure 5(a), when the flap 10 is in the close position, the opening of the chassis 9 is brought into the state in which the opening is covered with the flap 10. As shown in Figure 5(b), when the flap 10 is in the open position, the flap 10 retreats from the front of the opening of the chassis 9, and the opening of the chassis 9 is brought into the state in which the opening is exposed.

In this case, movement of the flap 10 between the close position and the open position is realized by control of the slide motor 14. The slide motor 14 of the flap unit 11 corresponds to a flap drive section of the present invention.

Further, the opening of the chassis 9 includes a bellows type cover 16. The cover 16 is provided in the vicinity of the opening of the chassis 9, and is provided at an inner side (an upper right side in Figure 4, a left side in Figure 5) from the flap 10.

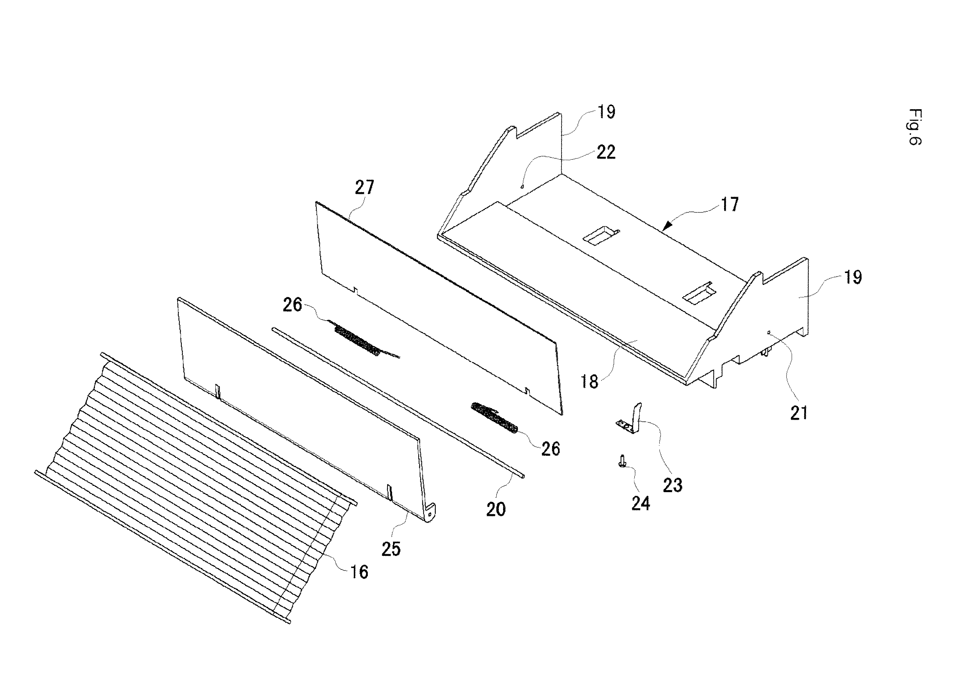

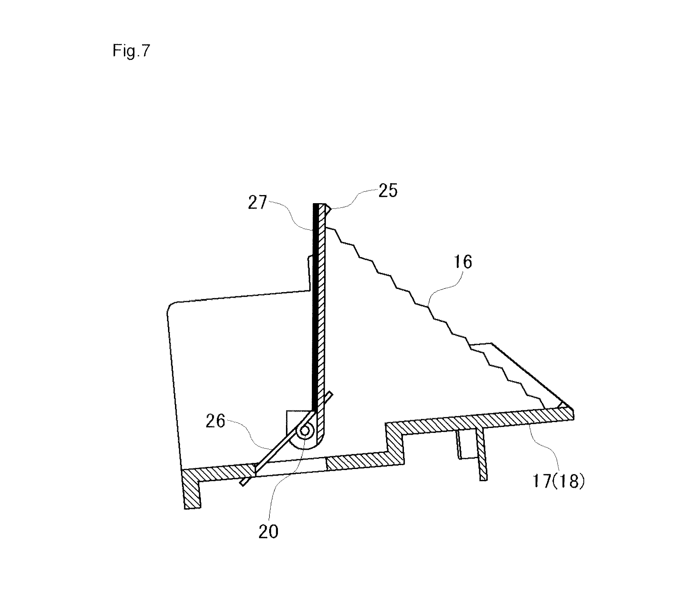

Figure 6 and Figure 7 each show an example of the bellows type cover 16. As shown in Figure 6 and Figure 7, a base member 17 is provided on a bottom surface of the opening of the chassis 9. The base member 17 is constituted of a bottom plate 18 and a left and right side plates 19, and is in substantially a U-shape in front view. A shaft insertion hole 21 through which a shaft 20 is inserted is provided in one of the side plates 19 of the base member 17, and a shaft receiving recessed portion 22 which bears the shaft 20 is provided in the other side plate 19. A shaft fixing member 23 is attached from an outside of the shaft insertion hole 21 to prevent the shaft 20 from being removed. The shaft fixing member 23 is fixed to the bottom plate 18 of the base member 17 with a screw 24. The shaft fixing member 23 is desirably made of a material having elasticity (resiliency) so as to be able to absorb play at the time of fixing the shaft.

An inner flap 25 is mounted to the shaft 20. One end portion (upper side) of the bellows type cover 16 is fixed to the inner flap 25. The other end portion (lower side) of the bellows type cover 16 is fixed to the bottom plate 18 of the base member 17. Further, a coil spring 26 which presses the inner flap 25 toward the inner side (an upper right side in Figure 6, a left side in Figure 7) is attached to the shaft 20. Accordingly, one end portion of the bellows type cover 16 is pressed against the inner side (that is, a display side) by an urging force of the coil spring 26. The coil spring 26 corresponds to a pressing member of the present invention. A protection member 27 made of a soft material (felt cloth or the like) is desirably provided on an inner side (display side) of the inner flap 25 to prevent damage of the display 3.

The bellows type cover 16 is configured to block a clearance which is formed between the opening of the chassis 9 and the display 3 when the display 3 moves (see Figure 10 to Figure 14). The size of the clearance which is formed between the opening of the chassis 9 and the display 3 changes as the display 3 moves, because the display 3 rotates in the tilt direction while slidingly moving. However, in this case, the one end portion (upper side) of the bellows type cover 16 is pressed against the display 3, and the other end portion (lower side) is fixed to the bottom plate 18 of the base member 17. Therefore, a distance between the one end portion of the bellows type cover 16 and the other end portion changes as the display 3 moves, and the size of the cover 16 (effective area which can be blocked with the cover 16) changes. Accordingly, the bellows type cover 16 can be said to be configured so that even when the size of the clearance which is formed between the opening of the chassis 9 and the display 3 changes in accordance with movement of the display 3, the size of the cover 16 is variable in response to the change of the clearance.

In regard with the display device 1 configured as above, an operation thereof will be described with reference to the drawings.

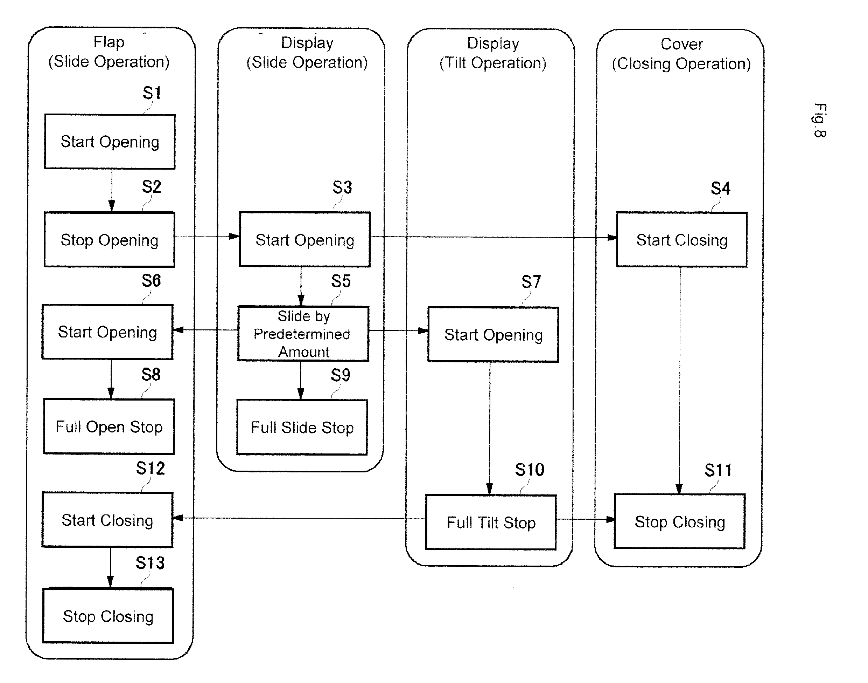

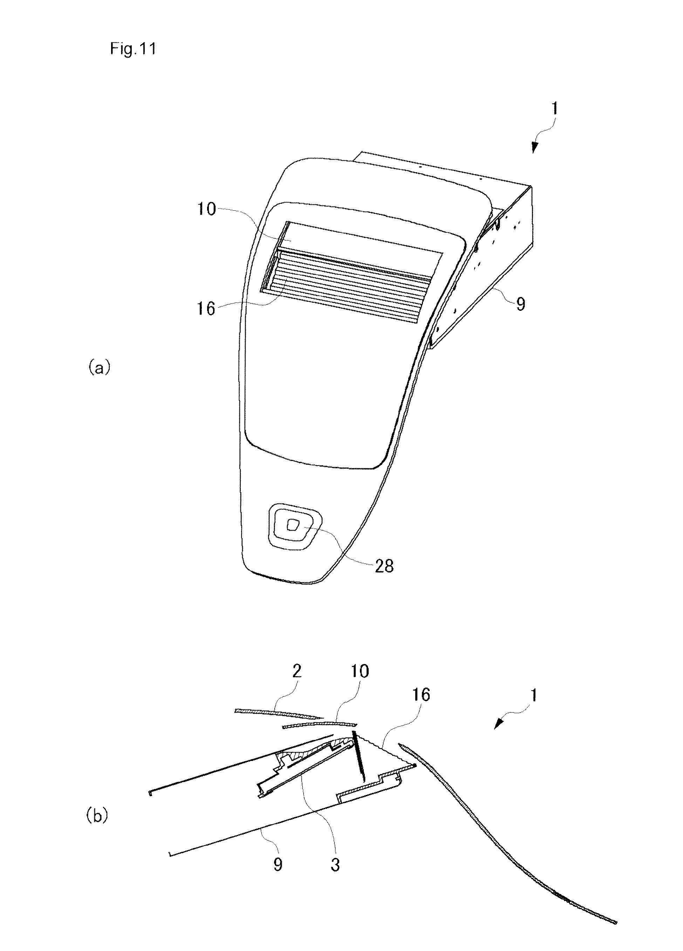

Figure 8 is a diagram explaining a flow of an operation (open operation) of bringing the display 3 into a use state from a disuse state. The open operation is performed in a state in which the display 3 is completely housed (see Figure 10). When the display 3 is brought into the use state, an open operation is performed first with a button 28 of the display device 1. Thereupon, as shown in Figure 8, a slide operation of opening the flap 10 is started (S1). Thereafter, when the flap 10 is brought into a state in which the flap 10 slides by a predetermined slide amount (for example, 51 mm) (see Figure 11), the slide operation of the flap 10 is stopped (S2), and a slide operation of opening the display 3 is started (S3). At this time, an operation of closing the cover 16 is started in conjunction with start of the slide operation of the display 3 (S4).

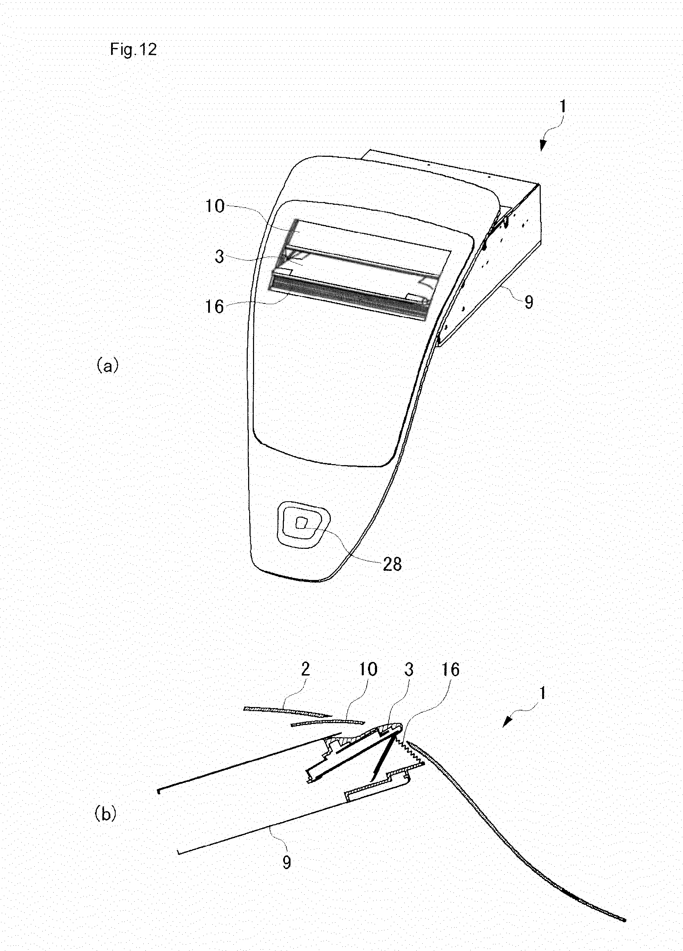

Thereafter, the display 3 is slid by a predetermined slide amount (for example, 50 mm) (S5). Subsequently, when the display 3 is brought into the state in which the display 3 is slid by the predetermined slide amount (for example, 50 mm) (see Figure 12), the slide operation of opening the flap 10 is restarted (S6), and the tilt operation of opening the display 3 is started (S7).

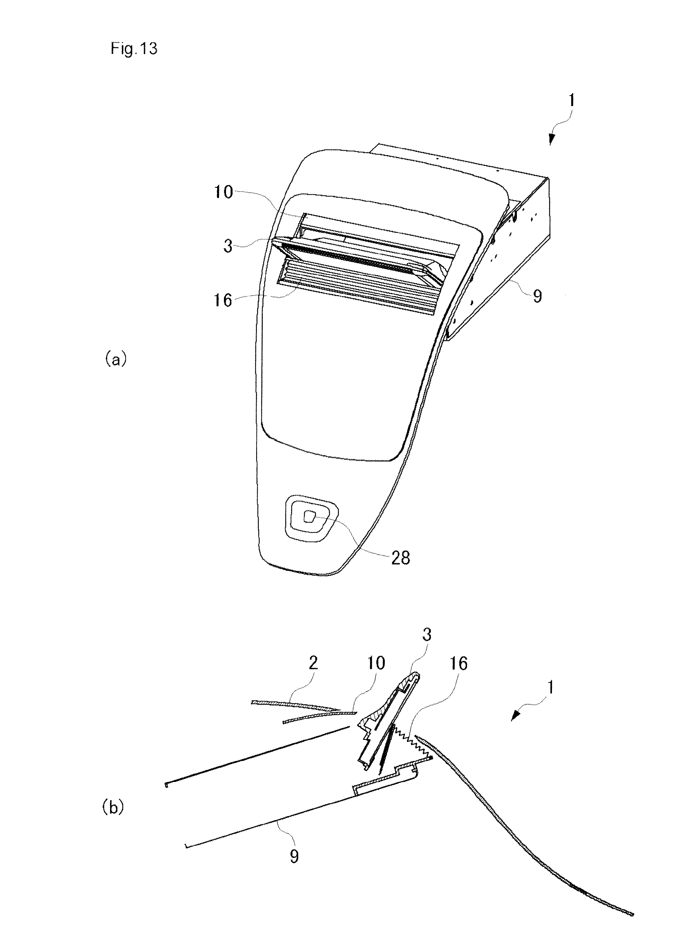

Subsequently, when the flap 10 reaches the open position (for example, a slide amount of 70 mm) (see Figure 13), the slide operation of opening the flap 10 is stopped (S8). Further, when the display 3 reaches a full slide position (for example, a slide amount of 85 mm), the slide operation of opening the display 3 is stopped (S9). Thereafter, when the display 3 is rotated to a full tilt position (for example, 90 degrees), the tilt operation of the display 3 is stopped (S10). At this time, in conjunction with stop of the tilt operation of the display 3, the operation of closing the cover 16 is stopped (S11).

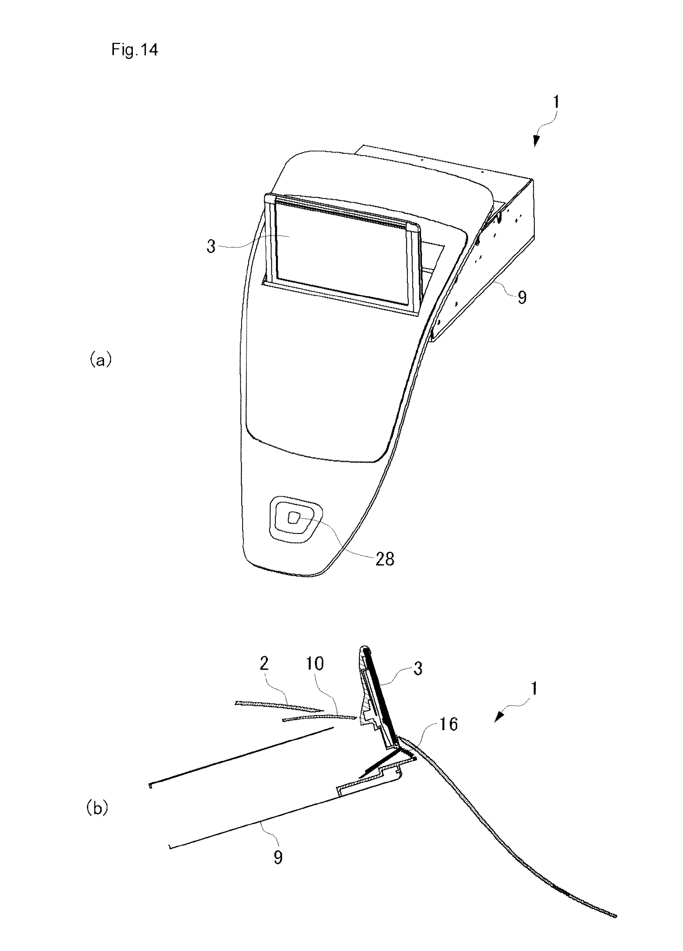

In this case, after the tilt operation of the display 3 is stopped, the slide operation of closing the flap 10 is started (S12). Subsequently, when the flap 10 reaches a position where the flap 10 is returned to a position (cover position) of a predetermined slide amount (for example, 51 mm) (see Figure 14), the slide operation of the flap 10 is stopped (S13). In this manner, the flap 10 is returned to the cover position, whereby the clearance between the flap 10 and the display 3 is blocked.

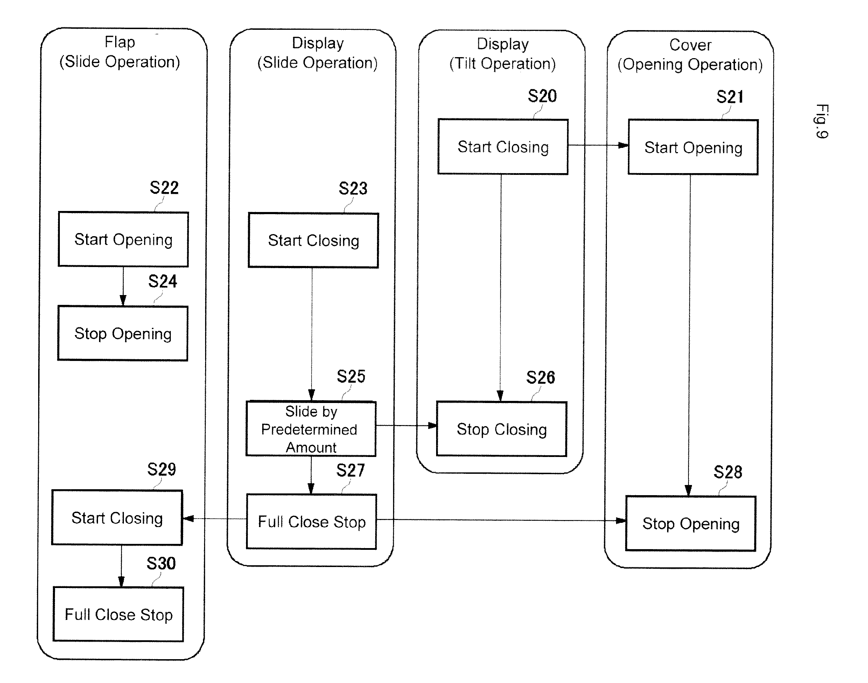

Figure 9 is a view explaining a flow of an operation (close operation) of bringing the display 3 into a disuse state from a use state. When the display 3 is brought into the disuse state, a close operation is performed with a button 28 of the display device 1. Thereupon, as shown in Figure 9, a tilt operation of closing the display 3 is started (S20). At this time, an operation of opening the cover 16 is started in conjunction with start of the tilt operation of the display 3 (S21).

Subsequently, a slide operation of opening the flap 10 is started (S22), and a slide operation of closing the display 3 is started (S23). Thereafter, when the flap 10 reaches the open position (see Figure 13), the slide operation of opening the flap 10 is stopped (S24). Subsequently, the display 3 is slid by a predetermined slide amount (S25). When the display 3 is brought into a state in which the display 3 is slid by the predetermined slide amount (see Figure 12), the tilt operation of closing the display 3 is stopped (S26). Subsequently, when the display 3 is brought into a state in which the display 3 is slid to a full close position (for example, a slide amount of 0 mm) (see Figure 11), the slide operation of closing the display 3 is stopped (S27). At this time, the operation of opening the cover 16 is stopped in conjunction with stop of the slide operation of the display 3 (S28).

Finally, a slide operation of closing the flap 10 is started (S29), and when the flap 10 is brought into the state in which the flap 10 is slid to the full close position, the slide operation of the flap 10 is stopped (S30).

According to the display device 1 of the embodiment of the present invention as above, as shown in Figure 10 to Figure 14, when the display 3 moves to the use position from the disuse position, or when the display 3 moves to the disuse position from the use position, the clearance which is formed between the opening of the chassis 9 and the display 3 is blocked by the cover 16. Accordingly, the contents can be prevented from being completely visible from the clearance, and the appearance is improved. Further, foreign matters (for example, coins, cards and the like) can be prevented from entering the inside from the clearance.

Further, in the present embodiment, the one end portion of the cover 16 is pressed against the display 3 by the spring, and the size of the cover 16 is changed in conjunction with the movement of the display 3 by the motors (the tilt motor 7 and the slide motor 8) of the display unit 4. Accordingly, a drive section such as a motor does not have to be additionally provided in order to change the size of the cover 16.

Further, in the present embodiment, the display 3 is rotated while being slidingly moved, and therefore, as compared with the case in which slide movement and rotation of the display 3 are performed separately, the time that is required (duration) when the display 3 is moved between the disuse position and the use position can be reduced.

When the display 3 is rotated while being slidingly moved, the opening of the chassis 9 needs to be made large as compared with the case in which the sliding movement and the rotation of the display 3 are separately performed, and in the present embodiment, even though the opening of the chassis 9 becomes large (and as a result, the clearance which is formed between the opening of the chassis 9 and the display 3 becomes large), the clearance is blocked by the cover 16. Accordingly, the contents therein can be prevented from being completely visible from the clearance (providing poor appearance), and the foreign matters (for example, coins, cards and the like) can be prevented from entering the inside from the clearance.

Further, in the present embodiment, as shown in Figure 14, the flap 10 is moved to the cover position when the display 3 is in the use position, and the clearance between the flap 10 and the display 3 is made small. Accordingly, foreign matters (for example, coins, cards and the like) can be prevented from entering the inside from the clearance.

Further, in the present embodiment, the bellows type cover 16 is adopted. Accordingly, with the relatively simple configuration, the size of the cover 16 can be made variable.

The embodiment of the present invention is described by showing examples thus far, but the scope of the present invention is not limited by the examples, and the present invention can be changed/modified in accordance with an object within the scope described in claims.

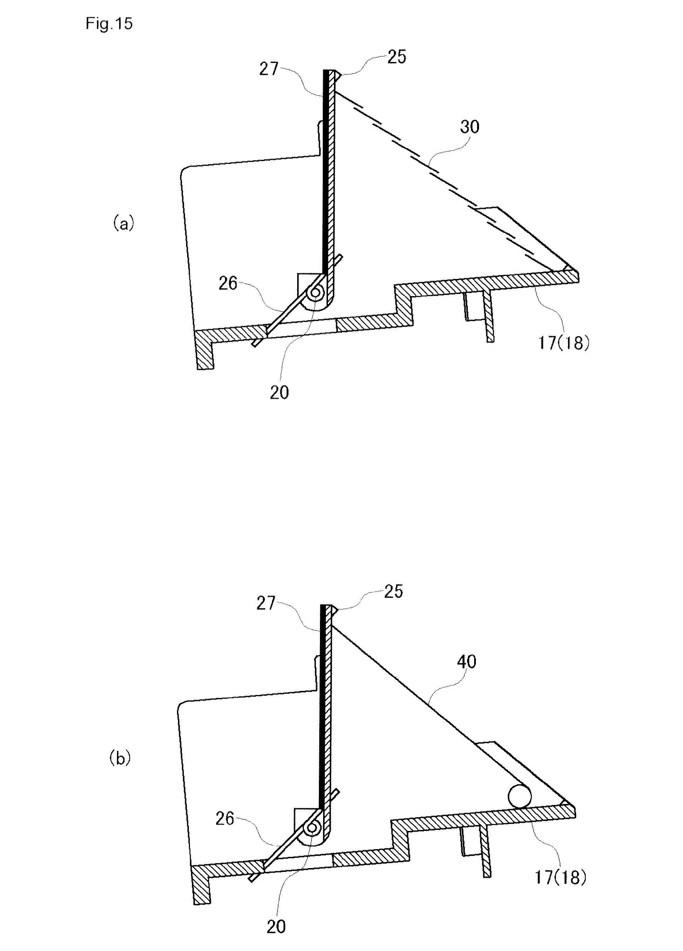

For example, in the above description, the example of adopting the bellows type cover 16 is described, but the scope of the present invention is not limited to the example. For example, as shown in Figure 15(a), a slide type cover 30 may be adopted, and as shown in Figure 15(b), a roll type cover 40 may be adopted.

A preferred embodiment of the present invention which is conceivable at the present point of time is described above. However, it is to be understood that various changes can be made with respect to the present embodiment, and all such changes as within the true spirit and scope of the present invention are intended to be included in the accompanying claims.

### [Industrial Applicability]

As above, the display device according to the present invention can prevent the contents from being completely visible from the clearance which is formed when moving the display to improve appearance, has the effect of being able to prevent foreign matters from entering from the clearance, is used as a completely housed type on-vehicle movable display or the like, and therefore, is useful.

### [Reference Signs List]

- 1: display device
- 2: dashboard
- 3: display
- 4: display unit
- 5: movable base
- 6: rail
- 7: tilt motor
- 8: slide motor
- 9: chassis
- 10: flap
- 11: flap unit
- 12: movable base
- 13: rail
- 14: slide motor
- 15: guide section
- 16: bellows type cover
- 17: base member
- 18: bottom plate
- 19: side plate
- 20: shaft
- 21: shaft insertion hole
- 22: shaft receiving recessed portion
- 23: shaft fixing member
- 24: screw
- 25: inner flap
- 26: coil spring
- 27: protection member
- 28: button
- 30: slide type cover
- 40: roll type cover

## Claims

1. A display device, comprising:
a display that is movable between a disuse position in which the display is housed in a display housing section, and a use position in which the display is out from an opening of the display housing section;
a flap that is provided at the opening of the display housing section, and is movable between a close position in which the flap covers the opening when the display in the disuse position, and an open position in which the flap exposes the opening when the display is in the use position; and
a cover that is provided at an inner side from the flap in a vicinity of the opening of the display housing section, and at least partially blocks a clearance that is formed between the opening of the display housing section and the display when the display moves from the disuse position to the use position, or when the display moves from the use position to the disuse position,
wherein a size of the clearance that is formed between the opening of the display housing section and the display changes as the display moves, and a size of the cover is variable in accordance with change of the size of the clearance.

2. The display device according to claim 1, further comprising:
a display drive section that moves the display between the disuse position and the use position,
wherein one end portion of the cover is pressed against the display by a pressing member, the other end portion of the cover is fixed to an inside of the display housing section, and
as the display moves by the display drive section, a distance between the one end portion of the cover that is pressed against the display and the other end portion of the cover that is fixed to the inside of the display housing section changes, and the size of the cover changes.

3. The display device according to claim 2,
wherein the display drive section rotates the display in a tilt direction while slidingly moving the display in an entrance/exit direction when the display drive section moves the display between the disuse position and the use position.

4. The display device according to claim 1, further comprising:
a flap drive section that moves the flap between the close position and the open position,
wherein after the flap drive section moves the flap from the close position to the open position, the flap drive section moves the flap to a cover position that is a position in which the flap is returned to the close position from the open position, and in which a clearance between the flap and the display is small.

5. The display device according to claim 1,
wherein the cover is a bellows type cover, a slide type cover, or a roll type cover.
